# EUROPÄISCHE PATENTSCHRIFT

(11) **EP 2 310 266 B1**
(45) Veröffentlichungstag und Bekanntmachung des Hinweises auf die Patenterteilung: **02.07.2014**
(21) Anmeldenummer: 09777403.8
(22) Anmeldetag: 23.07.2009
(51) Int. Cl.: B64D 13/06

(54) **SYSTEM UND VERFAHREN ZUR FÖRDERUNG VON REZIRKULATIONSLUFT AUS EINER FLUGZEUGKABINE**
SYSTEM AND METHOD FOR PUMPING RECIRCULATION AIR FROM AN AIRCRAFT CABIN
SYSTÈME ET PROCÉDÉ POUR ACHEMINER DE L'AIR DE RECIRCULATION ISSU D'UNE CABINE D'AÉRONEF

(30) Priorität: 28.07.2008 DE 102008035122; 28.07.2008 US 83977 P
(43) Veröffentlichungstag der Anmeldung: 20.04.2011
(73) Patentinhaber: Airbus Operations GmbH, 21129 Hamburg (DE)
(72) Erfinder: BRUNNBERG, Holger, 22763 Hamburg (DE); KRAKOWSKI, Dariusz, 21614 Buxtehude (DE)
(74) Vertreter: Schicker, Silvia
(86) Internationale Anmeldenummer: PCT/EP2009/005362
(87) Internationale Veröffentlichungsnummer: WO 2010/012416

(56) Entgegenhaltungen:
- EP-A- 1 116 655
- EP-A- 1 132 295
- DE-C1- 19 707 858
- US-A- 5 145 124

## Beschreibung

Die vorliegende Erfindung betrifft ein System und ein Verfahren zur Förderung von Rezirkulationsluft aus einer Flugzeugkabine.

Die Kabine eines modernen Passagierflugzeugs wird üblicherweise sowohl im Flugbetrieb als auch im Bodenbetrieb des Flugzeugs mittels einer flugzeugeigenen Klimaanlage klimatisiert. Der Flugzeugklimaanlage wird den Triebwerkskompressoren oder Hilfstriebwerkskompressoren entnommene Zapfluft zugeführt, die in den Klimaaggregaten, den sogenannten Klimapacks der Flugzeugklimaanlage auf eine gewünschte tiefe Temperatur abgekühlt wird. Die in den Klimapacks der Flugzeugklimaanlage abgekühlte Luft wird in einen Mischer geleitet, wo sie mit Rezirkulationsluft vermischt wird, die ein Rezirkulationssystem aus der Flugzeugkabine saugt. Die in dem Mischer erzeugte Mischluft aus von den Klimapacks bereitgestellter kalter Frischluft und aus der Flugzeugkabine gesaugter Rezirkulationsluft wird schließlich zur Klimatisierung der Flugzeugkabine in die Flugzeugkabine eingeleitet.

Das Rezirkulationssystem einer modernen Flugzeugklimaanlage umfasst eine Mehrzahl von Gebläsen, die beispielsweise als Niederdruckgebläse ausgebildet sein können. Um eine homogene Luftverteilung in einem zu klimatisierenden Flugzeugkabinenbereich, beispielsweise einem Deck eines Großraumflugzeugs zu gewährleisten, sind die Gebläse entlang des zu klimatisierenden Flugzeugkabinenbereichs verteilt angeordnet, wobei die Drehzahl der Gebläse jeweils so gesteuert wird, dass jedes Gebläse einen gewünschten Luftvolumenstrom aus dem zu klimatisierenden Flugzeugkabinenbereich extrahiert. Der von einem Gebläse aus dem zu klimatisierenden Flugzeugkabinenbereich abzusaugende Luftvolumenstrom hängt von verschiedenen Parametern, wie z.B. der Kabinenausstattung in dem zu klimatisierenden Kabinenbereich ab.

Bei einem Ausfall eines Gebläses des Rezirkulationssystems werden die verbleibenden noch funktionsfähigen Gebläse in einem derzeit gängigen Rezirkulationssystem so gesteuert, dass sie zur Kompensation der Luftextraktionsleistung des ausgefallenen Gebläses mit ihrer maximalen Leistung, d.h. ihrer maximalen Drehzahl betrieben werden. Diese Form der Fehlerkompensation wird als Maximalkompensation bezeichnet. Ein bei einem Ausfall eines Gebläses im Maximalkompensationsbetrieb betriebenes Rezirkulationssystem hat jedoch einen sehr hohen Stromverbrauch, der einen erhöhten Treibstoffverbrauch des Flugzeugs zu Folge hat. Darüber hinaus sind die im Maximalkompensationsbetrieb des Rezirkulationssystems unter Volllast betriebenen Gebläse sehr starken Belastungen ausgesetzt, die zusätzlichen Wartungsaufwand erforderlich machen, gegebenenfalls aber auch zu einer höheren Ausfallrate dieser Gebläse und somit zu einer eingeschränkten Verfügbarkeit des Gesamtsystems führen können.

Ferner kann ein im Maximalkompensationsbetrieb betriebenes Rezirkulationssystem Komforteinschränkungen für die Passagiere in der Flugzeugkabine zur Folge haben. Zum einen verursachen die unter Volllast betriebenen Gebläse Turbulenzen in dem aus dem zu klimatisierenden Flugzeugkabinenbereich abgesaugten Luftstrom und damit erhöhte Geräuschemissionen. Zum anderen können sich in dem zu klimatisierenden Flugzeugkabinenbereich unter Umständen Strömungsverhältnisse ausbilden, die lokal zu als unangenehm empfundenen Zugerscheinungen führen. Schließlich findet im Maximalkompensationsbetrieb des Rezirkulationssystems der im Normalbetrieb des Systems tatsächlich von dem ausgefallenen Gebläse aus dem zu klimatisierenden Flugzeugkabinenbereich zu extrahierende Luftvolumenstrom keine Berücksichtigung. Folglich kann der im Maximalkompensationsbetrieb von dem Rezirkulationssystem aus dem zu klimatisierenden Flugzeugkabinenbereich abgesaugte Gesamtluftvolumenstrom deutlich größer, aber auch kleiner sein, als der Gesamtluftvolumenstrom, der im Normalbetrieb des Rezirkulationssystems aus dem zu klimatisierenden Flugzeugkabinenbereich abgeführt wird.

Die Erfindung ist auf die Aufgabe gerichtet, ein System und ein Verfahren zur Förderung von Rezirkulationsluft aus einer Flugzeugkabine anzugeben, die auch im Fall eines Ausfalls einer Fördereinrichtung des Rezirkulationssystems einen effizienten Betrieb des Gesamtsystems ohne Komforteinschränkungen für die Passagieren in der Flugzeugkabine ermöglichen.

Diese Aufgabe wird durch ein System zur Förderung von Rezirkulationsluft aus einer Flugzeugkabine mit den Merkmalen des Anspruchs 1 sowie ein Verfahren zur Förderung von Rezirkulationsluft aus einer Flugzeugkabine mit den Merkmalen des Anspruchs 7 gelöst.

Ein erfindungsgemäßes System zur Förderung von Rezirkulationsluft aus einer Flugzeugkabine umfasst eine Mehrzahl von Fördereinrichtungen, die entlang eines zu klimatisierenden Flugzeugkabinenbereichs verteilt angeordnet sind. Die Fördereinrichtungen dienen dazu, Abluft, die zur Zufuhr in einen Mischer einer Flugzeugklimaanlage vorgesehen ist, aus dem zu klimatisierenden Flugzeugkabinenbereich zu saugen. Die Fördereinrichtungen können beispielsweise im Bereich der Seitenwände des zu klimatisierenden Flugzeugkabinenbereichs angeordnet sein, wobei die Verteilung der Fördereinrichtungen entlang der Seitenwände des zu klimatisierenden Flugzeugkabinenbereichs beispielsweise von der Ausstattung des zu klimatisierenden Flugzeugkabinenbereichs und/oder einer Unterteilung des zu klimatisierenden Flugzeugkabinenbereichs in verschiedene Klimazonen abhängig sein kann. Der zu klimatisierende Flugzeugkabinenbereich kann ein beliebiger Bereich einer Flugzeugkabine sein. In einem mit dem erfindungsgemäßen Rezirkulationssystem ausgestatteten Großraumflugzeug kann der zu klimatisierende Flugzeugkabinenbereich beispielsweise ein Deck des Großraumflugzeugs, insbesondere ein Oberdeck der Flugzeugkabine sein.

Eine Steuereinrichtung des erfindungsgemäßen Rezirkulationssystems ist dazu eingerichtet, die Fördereinrichtungen im Normalbetrieb des Rezirkulationssystems derart zu steuern, dass jede Fördereinrichtung einen vorbestimmten Luftvolumenstrom aus dem zu klimatisierenden Flugzeugkabinenbereich abführt. Vorzugsweise ist der von einer Fördereinrichtung aus dem zu klimatisierenden Flugzeugkabinenbereich abzuführende Luftvolumenstrom an die Zuordnung der Fördereinrichtung zu einem bestimmten Abschnitt des zu klimatisierenden Flugzeugkabinenbereichs angepasst. Beispielsweise existieren Abschnitte des zu klimatisierenden Flugzeugkabinenbereichs, aus denen große Abluftmengen abgeführt werden sollen. Die Steuereinrichtung kann dann diesen Abschnitten des zu klimatisierenden Flugzeugkabinenbereichs zugeordnete Fördereinrichtungen beispielsweise derart steuern, dass sie im Normalbetrieb des Rezirkulationssystems einen vorbestimmten Luftvolumenstrom von beispielsweise 200 oder 300 l/s aus dem zu klimatisierenden Flugzeugkabinenbereich abführen. Im Gegensatz dazu können auch Abschnitte des zu klimatisierenden Flugzeugkabinenbereichs existieren, aus denen lediglich ein geringerer Abluftvolumenstrom abgeführt werden soll. Die Steuereinrichtung des Rezirkulationssystems kann diesen Abschnitten des zu klimatisierenden Flugzeugkabinenbereichs zugeordnete Fördereinrichtungen dann beispielsweise derart steuern, dass sie im Normalbetrieb des Rezirkulationssystems einen vorbestimmten Luftvolumenstrom von lediglich 100 l/s aus dem zu klimatisierenden Flugzeugkabinenbereich abführen.

Um die Effizienz des Rezirkulationssystems zu maximieren und gleichzeitig das Systemgewicht zu minimieren, sind die Fördereinrichtungen hinsichtlich ihrer Maximalförderleistung an die im Normalbetrieb des Rezirkulationssystems an die Fördereinrichtungen gestellten Anforderungen angepasst. Insbesondere ist es sinnvoll, Abschnitten des zu klimatisierenden Flugzeugkabinenbereichs, aus denen im Normalbetrieb des Rezirkulationssystems lediglich ein geringer vorbestimmter Luftvolumenstrom abgeführt werden soll, Fördereinrichtungen mit einer geringeren Maximalförderleistung und folglich einem geringeren Gewicht und einem geringeren Stromverbrauch zuzuordnen. Abschnitten des zu klimatisierenden Flugzeugkabinenbereichs, aus denen im Normalbetrieb des Rezirkulationssystems ein großer vorbestimmter Luftvolumenstrom abgesaugt werden soll, sind dagegen vorzugsweise Fördereinrichtungen mit einer größeren Maximalförderleistung zugeordnet. Diese Fördereinrichtungen weisen jedoch im Vergleich zu Fördereinrichtungen mit einer geringeren Maximalförderleistung ein höheres Gewicht und einen höheren Stromverbrauch auf.

Die Steuereinrichtung des erfindungsgemäßen Rezirkulationssystems ist ferner dazu eingerichtet, bei einem Ausfall einer Fördereinrichtung zumindest einen Teil der verbleibenden noch funktionsfähigen Fördereinrichtungen derart zu steuern, dass der von den verbleibenden noch funktionsfähigen Fördereinrichtungen aus dem zu klimatisierenden Flugzeugkabinenbereich abgeführte Gesamtvolumenstrom um einen Betrag erhöht wird, der einem im Normalbetrieb des Rezirkulationssystems von der ausgefallenen Fördereinrichtung aus dem zu klimatisierenden Flugzeugkabinenbereich abgeführten Luftvolumenstrombetrag entspricht. Mit anderen Worten, bei einem Ausfall einer Fördereinrichtung des erfindungsgemäßen Rezirkulationssystems wird die Förderleistung zumindest eines Teils der verbleibenden noch funktionsfähigen Fördereinrichtungen erhöht. Anders als bei aus dem Stand der Technik bekannten Rezirkulationssystemen werden die verbleibenden noch funktionsfähigen Fördereinrichtungen jedoch nicht mit ihrer maximalen Leistung betrieben. Stattdessen wird der von den verbleibenden noch funktionsfähigen Fördereinrichtungen aus dem zu klimatisierenden Flugzeugkabinenbereich abgesaugte Gesamtluftvolumenstrom gegenüber dem von diesen Fördereinrichtungen im Normalbetrieb des Rezirkulationssystems aus dem zu klimatisierenden Flugzeugkabinenbereich abgesaugten Gesamtluftvolumenstrom lediglich um einen Betrag erhöht, der dem im Normalbetrieb des Rezirkulationssystems von der ausgefallenen Fördereinrichtung aus dem zu klimatisierenden Flugzeugkabinenbereich abgesaugten Luftvolumenstrombetrag entspricht. Die Förderleistung der verbleibenden noch funktionsfähigen Fördereinrichtungen wird somit nur um den Betrag gesteigert, der erforderlich ist, um die Förderleistung der ausgefallenen Fördereinrichtung zu kompensieren.

Die Steuereinrichtung des erfindungsgemäßen Rezirkulationssystems kann dazu eingerichtet sein, bei einem Ausfall einer Fördereinrichtung lediglich einen Teil der verbleibenden noch funktionsfähigen Fördereinrichtungen zur Kompensation des Ausfalls einer Fördereinrichtung heranziehen. Vorzugsweise werden von der Steuereinrichtung jedoch alle verbleibenden noch funktionsfähigen Fördereinrichtungen in den Betrieb zur Kompensation des Ausfalls einer Fördereinrichtung einbezogen.

Anders als bei aus dem Stand der Technik bekannten Rezirkulationssystemen, die bei einem Ausfall einer Fördereinrichtung in einen Maximalkompensationsbetriebszustand übergehen, wird bei dem erfindungsgemäßen System zur Förderung von Rezirkulationsluft aus einer Flugzeugkabine bei einem Ausfall einer Fördereinrichtung der von der ausgefallenen Fördereinrichtung im Normalbetrieb des Rezirkulationssystems tatsächlich aus dem zu klimatisierenden Flugzeugkabinenbereich abgeführte Luftvolumenstrom berücksichtigt. Der von den verbleibenden noch funktionsfähigen Fördereinrichtungen aus dem zu klimatisierenden Flugzeugkabinenbereich abgeführte Gesamtluftvolumenstrom wird lediglich um einen Betrag erhöht, der ausreicht, um den durch den Ausfall der Fördereinrichtung verursachten Förderleistungsverlust zu kompensieren. Bei dem erfindungsgemäßen Rezirkulationssystem entspricht somit der bei einem Ausfall einer Fördereinrichtung des Rezirkulationssystems aus dem zu klimatisierenden Flugzeugkabinenbereich abgeführte Gesamtluftvolumenstrom dem Gesamtluftvolumenstrom, der auch im Normalbetrieb des Rezirkulationssystems, in dem alle Fördereinrichtungen des Rezirkulationssystems funktionsfähig sind, aus dem zu klimatisierenden Flugzeugkabinenbereich abgeführt wird.

Im Vergleich zu einem bei einem Ausfall einer Fördereinrichtung im Maximalkompensationsbetrieb betriebenen Rezirkulationssystem zeichnet sich das erfindungsgemäße Rezirkulationssystem somit durch einen geringeren Stromverbrauch aus, durch den auch der Treibstoffverbrauch des Flugzeugs reduziert wird. Darüber hinaus müssen in dem erfindungsgemäßen Rezirkulationssystem bei einem Ausfall einer Fördereinrichtung die verbleibenden noch funktionsfähigen Fördereinrichtungen nicht unter Volllast betrieben werden, wodurch diese Fördereinrichtungen geschont werden. Dadurch können der Wartungsaufwand für diese Fördereinrichtungen und die Ausfallrate dieser Fördereinrichtungen verringert und folglich die Verfügbarkeit des Gesamtsystems verbessert werden.

Ein weiterer Vorteil des erfindungsgemäßen Rezirkulationssystems besteht darin, dass die Strömungsverhältnisse in dem zu klimatisierenden Flugzeugkabinenbereich bei einem Ausfall einer Fördereinrichtung durch die lediglich bedarfsgerechte Kompensation des Fördereinrichtungsausfalls sehr viel weniger beeinflusst werden, als dies durch einen Maximalkompensationsbetrieb des Rezirkulationssystems der Fall wäre. Von Passagieren in dem zu klimatisierenden Flugzeugkabinenbereich als unangenehm empfundene Zugerscheinungen können daher ebenso vermieden werden, wie stark erhöhte Geräuschemissionen durch unter Volllast betriebene Fördereinrichtungen. Im Betrieb des erfindungsgemäßen Rezirkulationssystems kommt es daher auch bei einem Ausfall einer Fördereinrichtung nicht zu Komforteinschränkungen für die Passagiere in dem zu klimatisierenden Flugzeugkabinenbereich.

Vorzugsweise sind die Fördereinrichtungen des erfindungsgemäßen Rezirkulationssystems in Form von Gebläsen ausgebildet. Wenn es sich bei dem zu klimatisierenden Flugzeugkabinenbereich um ein Oberdeck eines Großraumflugzeugs handelt, können die Fördereinrichtungen beispielsweise als Niederdruckgebläse ausgebildet sein. Die Steuereinrichtung des erfindungsgemäßen Rezirkulationssystems kann dann dazu eingerichtet sein, zur Steuerung des von den Fördereinrichtungen aus dem zu klimatisierenden Flugzeugkabinenbereich abgeführten Luftvolumenstroms eine Drehzahl der in Form von Gebläsen ausgebildeten Fördereinrichtungen zu steuern.

Die Steuereinrichtung des erfindungsgemäßen Rezirkulationssystems kann ferner dazu eingerichtet sein, bei einem Ausfall einer Fördereinrichtung des Rezirkulationssystems zumindest einen Teil der verbleibenden noch funktionsfähigen Fördereinrichtungen derart zu steuern, dass die verbleibenden noch funktionsfähigen Fördereinrichtungen jeweils einen um den gleichen Betrag erhöhten Luftvolumenstrom aus dem zu klimatisierenden Flugzeugkabinenbereich abführen. Mit anderen Worten, die Steuereinrichtung kann die verbleibenden noch funktionsfähigen Fördereinrichtungen derart steuern, dass der Ausfall der Fördereinrichtung gleichmäßig von den verbleibenden noch funktionsfähigen Fördereinrichtungen kompensiert wird. Die verbleibenden noch funktionsfähigen Fördereinrichtungen fördern folglich jeweils einen Luftvolumenstrom aus dem zu klimatisierenden Flugzeugkabinenbereich, der sich aus der Summe des von den Fördereinrichtungen im Normalbetrieb des Rezirkulationssystems aus dem zu klimatisierenden Flugzeugkabinenbereich abgeführten Luftvolumenstrom und des zur Kompensation des Fördereinrichtungsausfalls zusätzlich aus dem zu klimatisierenden Flugzeugkabinenbereich abzuführenden Luftvolumenstroms ergibt. Der zur Kompensation der Fördereinrichtungsausfalls von jeder verbleibenden noch funktionsfähigen Fördereinrichtung zu fördernde zusätzliche Luftvolumenstrom berechnet sich aus dem Quotienten des im Normalbetrieb des Rezirkulationssystems von der ausgefallenen Fördereinrichtung aus dem zu klimatisierenden Flugzeugkabinenbereich abgeführten Luftvolumenstrom und der Anzahl der verbleibenden noch funktionsfähigen Fördereinrichtungen.

Wenn beispielsweise in einem Rezirkulationssystem, das zehn Fördereinrichtungen umfasst, eine Fördereinrichtung ausfällt, die im Normalbetrieb des Rezirkulationssystems einen Luftvolumenstrom von 200 1/s aus dem zu klimatisierenden Flugzeugkabinenbereich abführt, kann die Steuereinrichtung zumindest einen Teil der neun verbleibenden noch funktionsfähigen Fördereinrichtungen so steuern, dass sie mit einem gleichmäßig erhöhten Fördervolumen betrieben werden, das ausreichend ist, um den durch den Ausfall der Fördereinrichtung verursachten Fördervolumenverlust in Höhe von 200 1/s zu kompensieren. Wenn die Steuereinrichtung alle neun verbleibenden noch funktionsfähigen Fördereinrichtungen in den Kompensationsbetrieb einbezieht, kann das zu kompensierende Fördervolumen in Höhe von 200 l/s auf die neun verbleibenden noch funktionsfähigen Fördereinrichtungen verteilt werden, so dass jede der verbleibenden noch funktionsfähigen Fördereinrichtungen einen zusätzlichen Luftvolumenstrom von ca. 22,2 l/s aus dem zu klimatisierenden Flugzeugkabinenbereich extrahieren muss. Alternativ dazu ist es natürlich auch denkbar, dass von der Steuereinrichtung nur ein Teil der neun verbleibenden noch funktionsfähigen Fördereinrichtungen zur Kompensation des Ausfalls einer Fördereinrichtung mit einem Fördervolumen von 200 l/s herangezogen wird. Der von diesen Fördereinrichtungen zusätzlich zu fördernde Luftvolumenstrom erhöht sich dann entsprechend und ergibt sich wiederum aus dem Quotienten des im Normalbetrieb des Rezirkulationssystems von der ausgefallenen Fördereinrichtung aus dem zu klimatisierenden Flugzeugkabinenbereich abgeführten Luftvolumenstrom und der Anzahl der zur Kompensation des Förderungseinrichtungsäusfalls herangezogenen verbleibenden noch funktionsfähigen Fördereinrichtungen.

Alternativ oder zusätzlich dazu kann die Steuereinrichtung des erfindungsgemäßen Systems zur Förderung von Rezirkulationsluft aus einer Flugzeugkabine auch dazu eingerichtet sein, bei einem Ausfall einer Fördereinrichtung zumindest einen Teil der verbleibenden noch funktionsfähigen Fördereinrichtung derart zu steuern, dass die verbleibenden noch funktionsfähigen Fördereinrichtungen jeweils einen um einen Betrag erhöhten Luftvolumenstrom aus dem zu klimatisierenden Flugzeugkabinenbereich abführen, der von der Steuereinrichtung in Abhängigkeit mindestens eines Parameters bestimmt wird. Mit anderen Worten, die Steuereinrichtung kann den aufgrund eines Ausfalls einer Fördereinrichtung von den verbleibenden noch funktionsfähigen Fördereinrichtungen zusätzlich aus dem zu klimatisierenden Flugzeugkabinenbereich zu fördernden Luftvolumenstrom in Abhängigkeit mindestens eines Parameters gewichtet auf die verbleibenden funktionsfähigen Fördereinrichtungen verteilen.

Grundsätzlich kann die Steuereinheit des erfindungsgemäßen Rezirkulationssystems lediglich eine gleichmäßige oder lediglich eine gewichtete Verteilung des zu kompensierenden Fördervolumens einer ausgefallenen Fördereinrichtung auf die verbleibenden funktionsfähigen Fördereinrichtungen vorsehen. Alternativ dazu kann die Steuereinrichtung jedoch auch dazu eingerichtet sein, je nach Betriebssituation entweder eine gleichmäßige oder eine gewichtete Verteilung des zu kompensierenden Fördervolumenstroms einer ausgefallenen Fördereinrichtung auf die verbleibenden noch funktionsfähigen Fördereinrichtungen vorzusehen.

Als Parameter, der/die von der Steuereinrichtung bei einem Ausfall einer Fördereinrichtung zur Steuerung zumindest eines Teils der verbleibenden noch funktionsfähigen Fördereinrichtungen herangezogen werden kann/können, dient/dienen beispielsweise ein für die Anordnung der verbleibenden noch funktionsfähigen Fördereinrichtungen relativ zu der ausgefallenen Fördereinrichtung charakteristischer Parameter und/oder ein für die Maximalleistung der verbleibenden noch funktionsfähigen Fördereinrichtungen charakteristischer Parameter. Der für die Anordnung einer verbleibenden noch funktionsfähigen Fördereinrichtung relativ zu der ausgefallenen Fördereinrichtung charakteristischer Parameter kann beispielsweise die Entfernung der verbleibenden noch funktionsfähigen Fördereinrichtung zu der ausgefallenen Fördereinrichtung sein.

Insbesondere ist die Steuereinrichtung des erfindungsgemäßen Rezirkulationssystems dazu eingerichtet, bei einem Ausfall einer Fördereinrichtung den Betrieb zumindest eines Teils der verbleibenden noch funktionsfähigen Fördereinrichtungen in Abhängigkeit des für die Anordnung der verbleibenden noch funktionsfähigen Fördereinrichtungen relativ zu der ausgefallenen Fördereinrichtung charakteristischen Parameters derart zu steuern, dass der von einer verbleibenden noch funktionsfähigen Fördereinrichtung aus dem zu klimatisierenden Flugzeugkabinenbereich abgeführte Luftvolumenstrom um einen umso größeren Betrag erhöht wird, umso näher die verbleibende noch funktionsfähige Fördereinrichtung an der ausgefallenen Fördereinrichtung angeordnet ist. Mit anderen Worten, in geringerer Entfernung zu der ausgefallenen Fördereinrichtung angeordnete verbleibende noch funktionsfähige Fördereinrichtungen werden so betrieben, dass sie einen höheren Anteil des zu kompensierenden, im Normalbetrieb des Rezirkulationssystems von der ausgefallenen Fördereinrichtung geförderten Luftvolumenstroms fördern als verbleibende noch funktionsfähige Fördereinrichtungen, die weiter entfernt von der ausgefallenen Fördereinrichtung angeordnet sind.

Beispielsweise kann bei einem Ausfall einer Fördereinrichtung, die im Normalbetrieb des Rezirkulationssystems einen Luftvolumenstrom von 200 l/s fördert, eine gewichtete Aufteilung des zu kompensierenden, d.h. von den verbleibenden noch funktionsfähigen Fördereinrichtungen zu übernehmenden Luftvolumenstroms derart erfolgen, dass unmittelbar zu der ausgefallenen Fördereinrichtung benachbarte verbleibende noch funktionsfähige Fördereinrichtungen einen zusätzlichen Luftvolumenstrom von 40 l/s aus dem zu klimatisierenden Flugzeugkabinenbereich abführen. Weiter entfernte verbleibende noch funktionsfähige Fördereinrichtungen können dagegen derart betrieben werden, dass sie einen zusätzlichen Luftvolumenstrom von lediglich 35, 30, 25, 10 oder 5 l/s fördern müssen. Bei einer gewichteten Kompensation des Ausfalls einer Fördereinrichtung werden die Strömungsverhältnisse, die sich im Normalbetrieb des erfindungsgemäßen Rezirkulationssystems in dem zu klimatisierenden Flugzeugkabinenbereich einstellen, besonders wenig beeinträchtigt. Komforteinschränkungen für die Passagiere in dem zu klimatisierenden Flugzeugkabinenbereich können somit auf besonders zuverlässige Weise vermieden werden.

Bei einem erfindungsgemäßen Verfahren zur Steuerung von Rezirkulationsluft aus einer Flugzeugkabine steuert eine Steuereinrichtung eine Mehrzahl von Fördereinrichtungen, die entlang eines zu klimatisierenden Flugzeugkabinenbereichs verteilt angeordnet sind, im Normalbetrieb des Rezirkulationssystems derart, dass jede Fördereinrichtung einen vorbestimmten Luftvolumenstrom aus dem zu klimatisierenden Flugzeugkabinenbereich abführt. Bei einem Ausfall einer Fördereinrichtung steuert die Steuereinrichtung zumindest einen Teil der verbleibenden noch funktionsfähigen Fördereinrichtungen derart, dass der von den verbleibenden noch funktionsfähigen Fördereinrichtungen aus dem zu klimatisierenden Flugzeugkabinenbereich abgeführte Gesamtluftvolumenstrom um einen Betrag erhöht wird, der einem im Normalbetrieb des Rezirkulationssystems von der ausgefallenen Fördereinrichtung aus dem zu klimatisierenden Flugzeugkabinenbereich abgeführten Luftvolumenstrombetrag entspricht. Bei dem erfindungsgemäßen Verfahren kann die Steuereinrichtung bei einem Ausfall einer Fördereinrichtung lediglich einen Teil der verbleibenden noch funktionsfähigen Fördereinrichtungen zur Kompensation des Ausfalls einer Fördereinrichtung heranziehen. Vorzugsweise werden von der Steuereinrichtung jedoch alle verbleibenden noch funktionsfähigen Fördereinrichtungen in den Betrieb zur Kompensation des Ausfalls einer Fördereinrichtung einbezogen.

Die Steuereinrichtung zur Steuerung des von den Fördereinrichtungen aus dem zu klimatisierenden Flugzeugkabinenbereich abgeführten Luftvolumenstroms kann eine Drehzahl der in Form von Gebläsen, beispielsweise Niederdruckgebläsen, ausgebildeten Fördereinrichtungen steuern.

Bei einem Ausfall einer Fördereinrichtung kann die Steuereinrichtung zumindest einen Teil der verbleibenden noch funktionsfähigen Fördereinrichtungen derart steuern, dass die verbleibenden noch funktionsfähigen Fördereinrichtungen jeweils einen um den gleichen Betrag erhöhten Luftvolumenstrom aus dem zu klimatisierenden Flugzeugkabinenbereich abführen. Mit anderen Worten, die Steuereinrichtung kann die verbleibenden funktionsfähigen Fördereinrichtungen derart steuern, dass der aufgrund des Ausfalls einer Fördereinrichtung zu kompensierende Luftvolumenstrom zu gleichen Teilen auf die verbleibenden noch funktionsfähigen Fördereinrichtungen verteilt wird.

Ferner kann die Steuereinrichtung bei einem Ausfall einer Fördereinrichtung zumindest einen Teil der verbleibenden noch funktionsfähigen Fördereinrichtungen derart steuern, dass die verbleibenden noch funktionsfähigen Fördereinrichtungen jeweils einen um einen Betrag erhöhten Luftvolumenstrom aus dem zu klimatisierenden Flugzeugkabinenbereich abführen, der von der Steuereinrichtung in Abhängigkeit mindestens eines Parameters bestimmt wird. Mit anderen Worten, die Steuereinrichtung kann eine gewichtete Verteilung des aufgrund des Ausfalls einer Fördereinrichtung zu kompensierenden Luftvolumenstroms auf die verbleibenden funktionsfähigen Fördereinrichtungen vorsehen. Grundsätzlich kann die Steuereinrichtung stets eine Gleichverteilung oder eine gewichtete Verteilung des aufgrund des Ausfalls einer Fördereinrichtung zu kompensierenden Luftvolumenstroms auf die verbleibenden noch funktionsfähigen Fördereinrichtungen vorsehen. Alternativ dazu kann die Steuereinrichtung jedoch auch je nach Betriebssituation entweder eine gleichmäßige oder eine gewichtete Verteilung des zu kompensierenden Luftvolumenstroms auf die verbleibenden noch funktionsfähigen Fördereinrichtungen vorsehen.

Beispielsweise kann die Steuereinrichtung einen für die Anordnung der verbleibenden noch funktionsfähigen Fördereinrichtungen relativ zu der ausgefallenen Fördereinrichtung charakteristischen Parameter heranziehen. Dieser charakteristische Parameter kann beispielsweise die Entfernung einer verbleibenden noch funktionsfähigen Fördereinrichtung zu der ausgefallenen Fördereinrichtung sein. Alternativ oder zusätzlich dazu kann die Steuereinrichtung bei der gewichteten Verteilung des zu kompensierenden Luftvolumenstroms auf die verbleibenden noch funktionsfähigen Fördereinrichtungen auch einen Parameter berücksichtigen, der für die Maximalleistung der verbleibenden noch funktionsfähigen Fördereinrichtungen charakteristisch ist.

Vorzugsweise steuert die Steuereinrichtung bei einem Ausfall einer Fördereinrichtung den Betrieb zumindest eines Teils der verbleibenden noch funktionsfähigen Fördereinrichtungen in Abhängigkeit des für Anordnung der verbleibenden noch funktionsfähigen Fördereinrichtungen relativ zu der ausgefallenen Fördereinrichtung charakteristischen Parameters derart, dass der von einer verbleibenden noch funktionsfähigen Fördereinrichtung aus dem zu klimatisierenden Flugzeugkabinenbereich geförderte Luftvolumenstrom um einen umso größeren Betrag erhöht wird, um so näher die verbleibende noch funktionsfähige Fördereinrichtung an der ausgefallenen Fördereinrichtung angeordnet ist. Mit anderen Worten, bei einem Ausfall einer Fördereinrichtung übernehmen verbleibende noch funktionsfähige Fördereinrichtungen, die in unmittelbarer Nähe der ausgefallenen Fördereinrichtung angeordnet sind, einen größeren Anteil des aufgrund des Ausfalls der Fördereinrichtung zu kompensierenden Luftvolumenstroms als verbleibende noch funktionsfähige Fördereinrichtungen, die weiter entfernt von der ausgefallenen Fördereinrichtung positioniert sind.

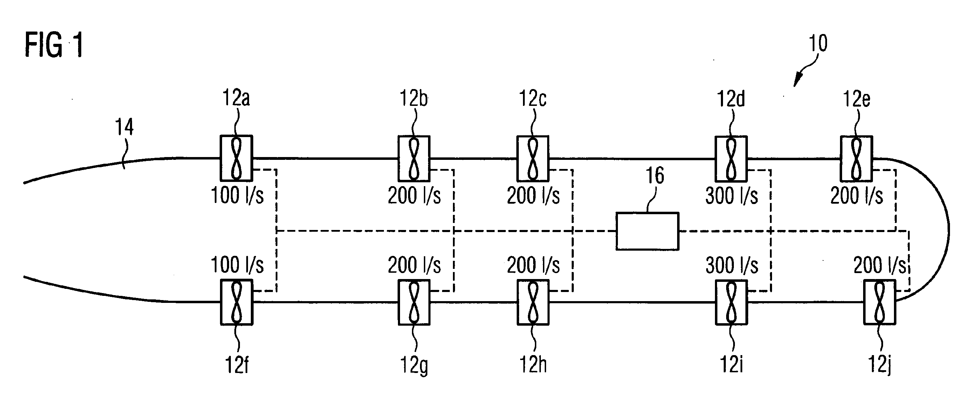

Bevorzugte Ausführungsformen der Erfindung werden nun anhand der beigefügten schematischen Figuren näher erläutert, von denen
- Figur 1: ein Rezirkulationssystem mit zehn Fördereinrichtungen im Normalbetrieb zeigt,

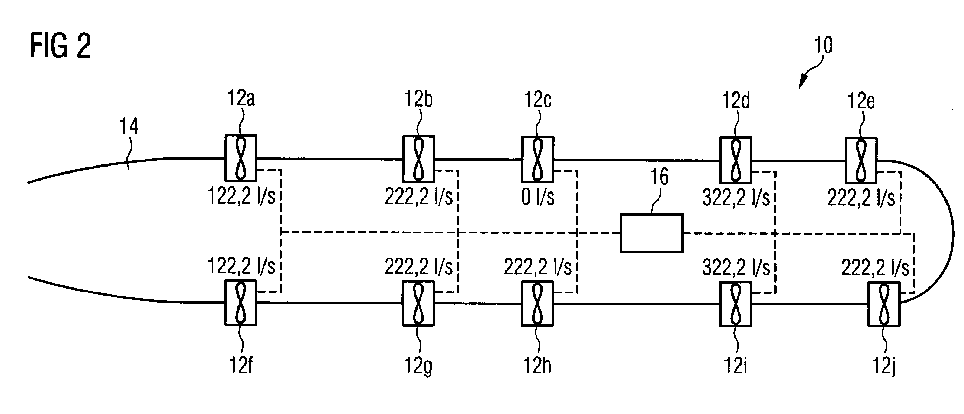

- Figur 2: das Rezirkulationssystem gemäß Figur 1 zeigt, bei dem ein Ausfall einer Fördereinrichtung durch eine gleichmäßige Verteilung der im Normalbetrieb von der ausgefallenen Fördereinrichtung gelieferten Förderleistung auf die verbleibenden noch funktionsfähigen Fördereinrichtungen kompensiert wird, und

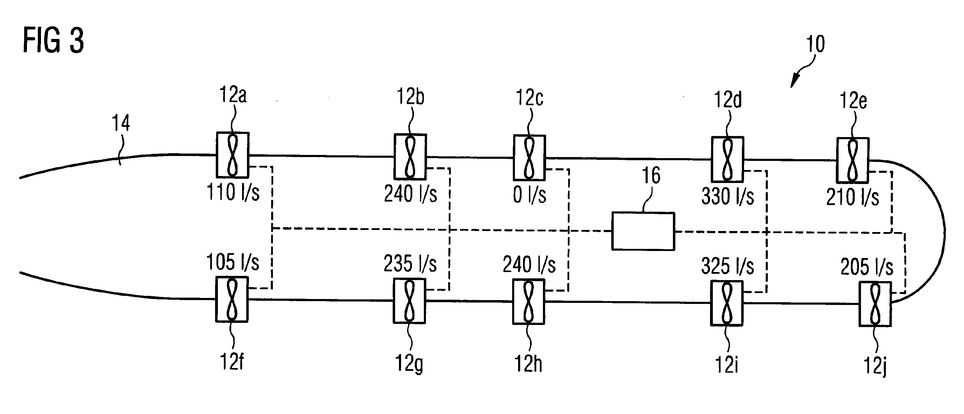

- Figur 3: ein Rezirkulationssystem gemäß Figur 1 zeigt, bei dem ein Ausfall einer Fördereinrichtung durch eine gewichtete Verteilung der im Normalbetrieb von der ausgefallenen Fördereinrichtung gelieferten Förderleistung auf die verbleibenden noch funktionsfähigen Fördereinrichtungen kompensiert wird.

Ein in Figur 1 gezeigtes System 10 zur Förderung von Rezirkulationsluft aus einer Flugzeugkabine umfasst zehn in Form von Niederdruckgebläsen ausgebildete Fördereinrichtungen 12a-17j. Die Fördereinrichtungen 12a-12j sind entlang einander gegenüberliegender Seitenwände eines zu klimatisierenden Flugzeugkabinenbereichs 14 verteilt angeordnet. In Abhängigkeit der Ausstattung des zu klimatisierenden Flugzeugkabinenbereichs 14 im Bereich der einzelnen Fördereinrichtungen 12a-12j werden die einzelnen Fördereinrichtungen 12a-12j im Normalbetrieb des Rezirkulationssystems 10 mit unterschiedlichen Förderleistungen betrieben. Während die Fördereinrichtungen 12a und 12f im Normalbetrieb des Rezirkulationssystems 10 lediglich einen Luftvolumenstrom von 100 l/s aus dem zu klimatisierenden Flugzeugkabinenbereich 14 abführen, werden die Fördereinrichtungen 12b, 12c, 12e, 12g, 12h und 12j im Normalbetrieb des Rezirkulationssystems 10 mit einer Förderleistung von 200 l/s und die Fördereinrichtungen 12d und 12e sogar mit einer Förderleistung von 300 l/s betrieben. Die Steuerung des Betriebs der Fördereinrichtungen 12a-12j erfolgt mit Hilfe einer elektronischen Steuereinrichtung 16.

Im Folgenden wird nun der Betrieb des Rezirkulationssystems 10 bei einem Ausfall der Fördereinrichtung 12c diskutiert. Im Normalbetrieb des Rezirkulationssystems 10 fördert die Fördereinrichtung 12c einen Luftvolumenstrom von 200 l/s aus dem zu klimatisierenden Flugzeugkabinenbereich 14. Zur Kompensation des Ausfalls der Fördereinrichtung 12c steuert die Steuereinrichtung 16 die verbleibenden noch funktionsfähigen Fördereinrichtungen 12a, 12b und 12d-12j nun derart, dass der von den verbleibenden noch funktionsfähigen Fördereinrichtungen 12a, 12b und 12d-12j abgeführte Gesamtluftvolumenstrom, der im Normalbetrieb des Rezirkulationssystems 10 1800 l/s beträgt, um einen Betrag erhöht wird, der einen im Normalbetrieb des Rezirkulationssystems 10 von der ausgefallenen Fördereinrichtung 12c aus dem zu klimatisierenden Flugzeugkabinenbereich 14 abgeführten Luftvolumenstrom in Höhe von 200 l/s entspricht. Mit anderen Worten, der von den verbleibenden noch funktionsfähigen Fördereinrichtungen 12a, 12b und 12d-12j geförderte Gesamtluftvolumenstrom wird um 200 l/s von 1800 l/s auf 2000 l/s erhöht.

Wie in Figur 2 gezeigt ist, kann die elektronische Steuereinrichtung 16 die verbleibenden noch funktionsfähigen Fördereinrichtungen 12a, 12b und 12d-12j jeweils derart steuern, dass die verbleibenden noch funktionsfähigen Fördereinrichtungen 12a, 12b und 12d-12j jeweils einen um den gleichen Betrag erhöhten Luftvolumenstrom aus dem zu klimatisierenden Flugzeugkabinenbereich 14 abführen. Im vorliegenden Fall, in dem die Förderleistung der Fördereinrichtung 12c in Höhe von 200 l/s kompensiert werden muss, ergibt sich ein Betrag, um den die Förderleistung der verbleibenden noch funktionsfähigen Fördereinrichtungen 12a, 12b und 12d bis 12j erhöht werden muss aus dem Quotienten aus der zu kompensierenden Förderleistung in Höhe von 200 l/s und der Anzahl der verbleibenden noch funktionsfähigen Fördereinrichtungen 12a, 12b und 12d-12j. Wie in Figur 2 gezeigt ist, wird folglich bei einer Gleichverteilung der zu kompensierenden Förderleistung der ausgefallenen Fördereinrichtung 12c auf die verbleibenden noch funktionsfähigen Fördereinrichtungen 12a, 12b und 12d-12j der von den verbleibenden noch funktionsfähigen Fördereinrichtungen 12a, 12b und 12d-12j aus dem zu klimatisierenden Flugzeugkabinenbereich 14 abgeführte Luftvolumenstrom um jeweils ca. 22,2 l/s erhöht.

Alternativ dazu kann die zu kompensierende Förderleistung der ausgefallenen Fördereinrichtung 12c jedoch auch in gewichteter Form auf die verbleibenden noch funktionsfähigen Fördereinrichtungen 12a, 12b und 12d-12j verteilt werden. Wie in Figur 3 gezeigt ist, kann insbesondere die Entfernung der einzelnen verbleibenden noch funktionsfähigen Fördereinrichtungen 12a, 12b und 12d-12j als Steuerparameter für die gewichtete Verteilung der zu kompensierenden Förderleistung der ausgefallenen Fördereinrichtung 12c auf die verbleibenden noch funktionsfähigen Fördereinrichtungen 12a, 12b und 12d-12j herangezogen werden. Insbesondere kann die elektronische Steuereinrichtung 16 die verbleibenden noch funktionsfähigen Fördereinrichtungen 12a, 12b und 12d-12j derart steuern, dass der von einer verbleibenden noch funktionsfähigen Fördereinrichtung 12a, 12b und 12d-12j aus dem zu klimatisierenden Flugzeugkabinenbereich 14 abgeführte Luftvolumenstrom um einen umso größeren Betrag erhöht wird, um so näher die verbleibende noch funktionsfähige Fördereinrichtung 12a, 12b und 12d-12j an der ausgefallenen Fördereinrichtung 12c angeordnet ist.

In dem in Figur 3 gezeigten Ausführungsbeispiel wird die Förderleistung der unmittelbar zu der ausgefallenen Fördereinrichtung 12c benachbarten Fördereinrichtungen 12b und 12h um jeweils 40 l/s erhöht. Die Förderleistung der schräg gegenüber von der ausgefallenen Fördereinrichtung 12c angeordneten Fördereinrichtung 12g wird um 35 l/s erhöht. Die ebenfalls zu der ausgefallenen Fördereinrichtung 12c benachbarte, aber weiter als die Fördereinrichtungen 12b und 12h von der ausgefallenen Fördereinrichtung 12c entfernte Fördereinrichtung 12d wird dagegen mit einer um 30 l/s erhöhten Förderleistung betrieben. Der von der Fördereinrichtung 12i aus dem zu klimatisierenden Flugzeugkabinenbereich 14 abgeführte Luftvolumenstrom wird um 25 l/s erhöht. Die verhältnismäßig weit von der ausgefallenen Fördereinrichtung 12c entfernten Fördereinrichtungen 12a, 12e, 12f und 12j werden dagegen mit um lediglich 10 l/s bzw. 5 l/2 erhöhten Förderleistungen betrieben.

## Patentansprüche

1. System (10) zur Förderung von Rezirkulationsluft aus einer Flugzeugkabine, umfassend:
- einen Flugzeugkabinenbereich (14),
- eine Mehrzahl von Fördereinrichtungen (12a-12j), die entlang des Flugzeugkabinenbereichs (14) verteilt angeordnet sind, und
- eine Steuereinrichtung (16), die dazu eingerichtet ist, die Fördereinrichtungen (12a-12j) im Normalbetrieb des Systems (10) derart zu steuern, das jede Fördereinrichtung (12a-12j) einen vorbestimmten Luftvolumenstrom aus dem Flugzeugkabinenbereich (14) abführt,
**dadurch gekennzeichnet, dass** die Fördereinrichtungen (12a-12j) hinsichtlich ihrer Maximalförderleistung an die im Normalbetrieb des Systems (10) an die Fördereinrichtungen (12a-12j) gestellten Anforderungen angepasst sind und die Steuereinrichtung (16) dazu einrichtet ist, bei einem Ausfall einer Fördereinrichtung (12c) zumindest einen Teil der verbleibenden noch funktionsfähigen Fördereinrichtungen (12a, 12b, 12d-12j) derart zu steuern, dass der von den verbleibenden noch funktionsfähigen Fördereinrichtungen (12a, 12b, 12d-12j) aus dem Flugzeugkabinenbereich (14) abgeführte Gesamtluftvolumenstrom um einen Betrag erhöht wird, der einem im Normalbetrieb des Systems (10) von der ausgefallenen Fördereinrichtung (12c) aus dem Flugzeugkabinenbereich (14) abgeführten Luftvolumenstrombetrag entspricht.

2. System nach Anspruch 1,
**dadurch gekennzeichnet, dass** die Fördereinrichtungen (12a-12j) in Form von Gebläsen ausgebildet sind und die Steuereinrichtung (16) dazu eingerichtet ist, zur Steuerung des von den von den Fördereinrichtungen (12a-12j) aus dem Flugzeugkabinenbereich (14) abgeführten Luftvolumenstroms eine Drehzahl der Fördereinrichtungen (12a-12j) zu steuern.

3. System nach Anspruch 1 oder 2,
**dadurch gekennzeichnet, dass** die Steuereinrichtung (16) dazu eingerichtet ist, bei einem Ausfall einer Fördereinrichtung (12c) zumindest einen Teil der verbleibenden noch funktionsfähigen Fördereinrichtungen (12a, 12b, 12d-12j) derart zu steuern, dass die verbleibenden noch funktionsfähigen Fördereinrichtungen (12a, 12b, 12d-12j) jeweils einen um den gleichen Betrag erhöhten Luftvolumenstrom aus dem Flugzeugkabinenbereich (14) abführen.

4. System nach einem der Ansprüche 1 bis 3,
**dadurch gekennzeichnet, dass** die Steuereinrichtung (16) dazu eingerichtet ist, bei einem Ausfall einer Fördereinrichtung (12c) zumindest einen Teil der verbleibenden noch funktionsfähigen Fördereinrichtungen (12a, 12b, 12d-12j) derart zu steuern, dass die verbleibenden noch funktionsfähigen Fördereinrichtungen (12a, 12b, 12d-12j) jeweils einen um einen Betrag erhöhten Luftvolumenstrom aus dem Flugzeugkabinenbereich (14) abführen, der von der Steuereinrichtung (16) in Abhängigkeit mindestens eines Parameters bestimmt wird.

5. System nach Anspruch 4,
**dadurch gekennzeichnet, dass** der/die Parameter, der/die von der Steuereinrichtung (16) bei einem Ausfall einer Fördereinrichtung (12c) zur Steuerung zumindest eines Teils der verbleibenden noch funktionsfähigen Fördereinrichtungen (12a, 12b, 12d-12j) herangezogen wird/werden, ein für die Anordnung der verbleibenden noch funktionsfähigen Fördereinrichtungen (12a, 12b, 12d-12j) relativ zu der ausgefallenen Fördereinrichtung (12c) charakteristischer Parameter und/oder ein für die Maximalleistung der verbleibenden noch funktionsfähigen Fördereinrichtungen (12a, 12b, 12d-12j) charakteristischer Parameter ist/sind.

6. System nach Anspruch 5,
**dadurch gekennzeichnet, dass** die Steuereinrichtung (16) dazu eingerichtet ist, bei einem Ausfall einer Fördereinrichtung (12c) den Betrieb zumindest eines Teil der verbleibenden noch funktionsfähigen Fördereinrichtungen (12a, 12b, 12d-12j) in Abhängigkeit des für die Anordnung der verbleibenden noch funktionsfähigen Fördereinrichtungen (12a, 12b, 12d-12j) relativ zu der ausgefallenen Fördereinrichtung (12c) charakteristischen Parameters derart zu steuern, dass der von einer verbleibenden noch funktionsfähigen Fördereinrichtung (12a, 12b, 12d-12j) aus dem Flugzeugkabinenbereich (14) abgeführte Luftvolumenstrom um einen umso größeren Betrag erhöht wird, umso näher die verbleibende noch funktionsfähige Fördereinrichtung (12a, 12b, 12d-12j) an der ausgefallenen Fördereinrichtung (12c) angeordnet ist.

7. Verfahren zur Förderung von Rezirkulationsluft aus einer Flugzeugkabine, bei dem eine Steuereinrichtung (16) eine Mehrzahl von Fördereinrichtungen (12a-12j), die entlang eines Flugzeugkabinenbereichs (14) verteilt angeordnet sind, im Normalbetrieb des Systems (10) derart steuert, dass jede Fördereinrichtung (12a-12j) einen vorbestimmten Luftvolumenstrom aus dem Flugzeugkabinenbereich (14) abführt, **dadurch gekennzeichnet, dass** die Fördereinrichtungen (12a-12j) hinsichtlich ihrer Maximalförderleistung an die im Normalbetrieb des Systems (10) an die Fördereinrichtungen (12a-12j) gestellten Anforderungen angepasst sind und die Steuereinrichtung (16) bei einem Ausfall einer Fördereinrichtung (12c) zumindest einen Teil der verbleibenden noch funktionsfähigen Fördereinrichtungen (12a, 12b, 12d-12j) derart steuert, dass der von den verbleibenden noch funktionsfähigen Fördereinrichtungen (12a, 12b, 12d-12j) aus dem Flugzeugkabinenbereich (14) abgeführte Gesamtluftvolumenstrom um einen Betrag erhöht wird , der einem im Normalbetrieb des Systems (10) von der ausgefallenen Fördereinrichtung (12c) aus dem Flugzeugkabinenbereich (14) abgeführten Luftvolumenstrombetrag entspricht.

8. Verfahren nach Anspruch 7,
**dadurch gekennzeichnet, dass** die Steuereinrichtung (16) zur Steuerung des von den Fördereinrichtungen (12a-12j) aus dem Flugzeugkabinenbereich (14) abgeführten Luftvolumenstroms eine Drehzahl der in Form von Gebläsen ausgebildeten Fördereinrichtungen (12a-12j) steuert.

9. Verfahren nach Anspruch 7 oder 8,
**dadurch gekennzeichnet, dass** die Steuereinrichtung (16) bei einem Ausfall einer Fördereinrichtung (12c) zumindest einen Teil der verbleibenden noch funktionsfähigen Fördereinrichtungen (12a, 12b, 12d-12j) derart steuert, dass die verbleibenden noch funktionsfähigen Fördereinrichtungen (12a, 12b, 12d-12j) jeweils einen um den gleichen Betrag erhöhten Luftvolumenstrom aus dem Flugzeugkabinenbereich (14) abführen.

10. Verfahren nach einem der Ansprüche 7 bis 9,
**dadurch gekennzeichnet, dass** die Steuereinrichtung (16) bei einem Ausfall einer Fördereinrichtung (12c) zumindest einen Teil der verbleibenden noch funktionsfähigen Fördereinrichtungen (12a, 12b, 12d-12j) derart steuert, dass die verbleibenden noch funktionsfähigen Fördereinrichtungen (12a, 12b, 12d-12j) jeweils einen um einen Betrag erhöhten Luftvolumenstrom aus dem Flugzeugkabinenbereich (14) abführen, der von der Steuereinrichtung (16) in Abhängigkeit mindestens eines Parameters bestimmt wird.

11. Verfahren nach Anspruch 10,
**dadurch gekennzeichnet, dass** der/die Parameter, der/die von der Steuereinrichtung (16) bei einem Ausfall einer Fördereinrichtung (12c) zur Steuerung zumindest eines Teils der verbleibenden noch funktionsfähigen Fördereinrichtungen (12a, 12b, 12d-12j) herangezogen wird/werden, ein für die Anordnung der verbleibenden noch funktionsfähigen Fördereinrichtungen (12a, 12b, 12d-12j) relativ zu der ausgefallenen Fördereinrichtung (12c) charakteristischer Parameter und/oder ein für die Maximalleistung der verbleibenden noch funktionsfähigen Fördereinrichtungen (12a, 12b, 12d-12j) charakteristischer Parameter ist/sind.

12. Verfahren nach Anspruch 11,
**dadurch gekennzeichnet, dass** die Steuereinrichtung (16) bei einem Ausfall einer Fördereinrichtung (12c) den Betrieb zumindest eines Teil der verbleibenden noch funktionsfähigen Fördereinrichtungen (12a, 12b, 12d-12j) in Abhängigkeit des für die Anordnung der verbleibenden noch funktionsfähigen Fördereinrichtungen (12a, 12b, 12d-12j) relativ zu der ausgefallenen Fördereinrichtung (12c) charakteristischen Parameters derart steuert, dass der von einer verbleibenden noch funktionsfähigen Fördereinrichtung (12a, 12b, 12d-12j) aus dem Flugzeugkabinenbereich (14) abgeführte Luftvolumenstrom um einen umso größeren Betrag erhöht wird, umso näher die verbleibende noch funktionsfähige Fördereinrichtung (12a, 12b, 12d-12j) an der ausgefallenen Fördereinrichtung (12c) angeordnet ist.

## Claims

1. System (10) for conveying recirculation air from an aircraft cabin, with:
- an aircraft cabin region (14),
- a plurality of conveying devices (12a-12j) which are arranged in a manner distributed along the aircraft cabin region (14), and
- a control device (16) which is configured to control the conveying devices (12a-12j) in the normal operation of the system (10) in such a manner that each conveying device (12a-12j) removes a predetermined air volume flow from the aircraft cabin region (14),
**characterised in that** the conveying devices (12a-12j), with regard to their maximum conveying capability, are adjusted to the requirements the conveying devices (12a-12j) face during normal operation of the system (10) and the control device (16) is configured to control, in the event of a failure of a conveying device (12c), at least some of the remaining still functional conveying devices (12a, 12b, 12d-12j) in such a manner that the entire air volume flow removed from the aircraft cabin region (14) by the remaining still functional conveying devices (12a, 12b, 12d-12j) is increased by an amount corresponding to an air volume flow amount removed from the aircraft cabin region (14) by the failed conveying device (12c) in the normal operation of the system (10).

2. System according to Claim 1,
**characterised in that** the conveying devices (12a-12j) are constructed in the form of fans and the control device (16) is configured, for controlling the air volume flow removed from the aircraft cabin region (14) by the conveying devices (12a-12j), to control a rotational speed of the conveying devices (12a-12j).

3. System according to Claim 1 or 2,
**characterised in that** the control device (16) is configured to control, in the event of a failure of a conveying device (12c), at least some of the remaining still functional conveying devices (12a, 12b, 12d-12j) in such a manner that the remaining still functional conveying devices (12a, 12b, 12d-12j) remove an air volume flow from the aircraft cabin region (14) which is increased by the same amount.

4. System according to one of Claims 1 to 3,
**characterised in that** the control device (16) is configured to control, in the event of a failure of a conveying device (12c), at least some of the remaining still functional conveying devices (12a, 12b, 12d-12j) in such a manner that the remaining still functional conveying devices (12a, 12b, 12d-12j) remove an air volume flow from the aircraft cabin region (14) which is increased by an amount which is determined by the control device (16) in dependence on at least one parameter.

5. System according to Claim 4,
**characterised in that** the parameter(s) which is/are used by the control device (16), in the event of a failure of a conveying device (12c), to control at least some of the remaining still functional conveying devices (12a, 12b, 12d-12j) is/are a parameter characteristic of the arrangement of the remaining still functional conveying devices (12a, 12b, 12d-12j) relative to the failed conveying device (12c) and/or a parameter characteristic of the maximum output of the remaining still functional conveying devices (12a, 12b, 12d-12j).

6. System according to Claim 5,
**characterised in that** the control device (16) is configured to control, in the event of a failure of a conveying device (12c), the operation of at least some of the remaining still functional conveying devices (12a, 12b, 12d-12j) in dependence on the parameter characteristic of the arrangement of the remaining still functional conveying devices (12a, 12b, 12d-12j) relative to the failed conveying device (12c), in such a manner that the air volume flow removed from the aircraft cabin region (14) by a remaining still functional conveying device (12a, 12b, 12d-12j) is increased by a greater amount, the closer the arrangement of the remaining still functional conveying device (12a, 12b, 12d-12j) to the failed conveying device (12c).

7. Method for conveying recirculation air from an aircraft cabin, in which a control device (16) controls a plurality of conveying devices (12a-12j) which are arranged in a manner distributed along an aircraft cabin region (14), in the normal operation of the system (10), in such a manner that each conveying device (12a-12j) removes a predetermined air volume flow from the aircraft cabin region (14), **characterised in that** the conveying devices (12a-12j), with regard to their maximum conveying capability, are adjusted to the requirements the conveying devices (12a-12j) face during normal operation of the system (10) and the control device (16) controls, in the event of a failure of a conveying device (12c), at least some of the remaining still functional conveying devices (12a, 12b, 12d-12j) in such a manner that the entire air volume flow removed from the aircraft cabin region (14) by the remaining still functional conveying devices (12a, 12b, 12d-12j) is increased by an amount corresponding to an air volume flow amount removed from the aircraft cabin region (14) by the failed conveying device (12c) in the normal operation of the system (10).

8. Method according to Claim 7,
**characterised in that** the control device (16), for controlling the air volume flow removed from the aircraft cabin region (14) by the conveying devices (12a-12j), controls a rotational speed of the conveying devices (12a-12j), constructed in the form of fans.

9. Method according to Claim 7 or 8,
**characterised in that** the control device (16) controls, in the event of a failure of a conveying device (12c), at least some of the remaining still functional conveying devices (12a, 12b, 12d-12j) in such a manner that the remaining still functional conveying devices (12a, 12b, 12d-12j) remove an air volume flow from the aircraft cabin region (14) which is increased by the same amount.

10. Method according to one of Claims 7 to 9,
**characterised in that** the control device (16) controls, in the event of a failure of a conveying device (12c), at least some of the remaining still functional conveying devices (12a, 12b, 12d-12j) in such a manner that the remaining still functional conveying devices (12a, 12b, 12d-12j) remove an air volume flow from the aircraft cabin region (14) which is increased by an amount which is determined by the control device (16) in dependence on at least one parameter.

11. Method according to Claim 10,
**characterised in that** the parameter(s) which is/are used by the control device (16), in the event of a failure of a conveying device (12c), to control at least some of the remaining still functional conveying devices (12a, 12b, 12d-12j) is/are a parameter characteristic of the arrangement of the remaining still functional conveying devices (12a, 12b, 12d-12j) relative to the failed conveying device (12c) and/or a parameter characteristic of the maximum output of the remaining still functional conveying devices (12a, 12b, 12d-12j).

12. Method according to Claim 11,
**characterised in that** the control device (16) controls, in the event of a failure of a conveying device (12c), the operation of at least some of the remaining still functional conveying devices (12a, 12b, 12d-12j) in dependence on the parameter characteristic of the arrangement of the remaining still functional conveying devices (12a, 12b, 12d-12j) relative to the failed conveying device (12c), in such a manner that the air volume flow removed from the aircraft cabin region (14) by a remaining still functional conveying device (12a, 12b, 12d-12j) is increased by a greater amount, the closer the arrangement of the remaining still functional conveying device (12a, 12b, 12d-12j) to the failed conveying device (12c).

## Revendications

1. Système (10) pour acheminer de l'air de recirculation issu d'une cabine d'aéronef, comprenant :
- une zone de cabine d'aéronef (14),
- une pluralité de dispositifs d'acheminement (12a à 12j) qui sont répartis le long de la dite zone de cabine d'aéronef (14) et
- un dispositif de commande (16) qui est conçu pour commander lesdits dispositifs d'acheminement (12a à 12j) de telle sorte que, au cours du fonctionnement normal du système (10), chaque dispositif d'acheminement (12a à 12j) évacue de la zone de cabine d'aéronef (14) un débit volumique d'air prédéterminé,
**caractérisé en ce que** les dispositifs d'acheminement (12a à 12j) sont, pour ce qui est de leur puissance d'acheminement maximale, adaptés aux exigences posées aux dispositifs d'acheminement (12a à 12j) au cours du fonctionnement normal du système (10) et **en ce qu'**en cas de panne d'un dispositif d'acheminement (12c), ledit dispositif de commande (16) est conçu pour commander au moins une partie des dispositifs d'acheminement (12a, 12b, 12d à 12j) encore fonctionnels restants de telle sorte que, au cours du fonctionnement normal du système (10), le débit volumique d'air global évacué de la zone de cabine d'aéronef (14) par les dispositifs d'acheminement (12a, 12b, 12d à 12j) encore fonctionnels restants est augmenté d'une valeur qui correspond à une valeur de débit volumique d'air évacué de la zone de cabine d'aéronef (14) par le dispositif d'acheminement (12c) en panne.

2. Système selon la revendication 1,
**caractérisé en ce que** les dispositifs d'acheminement (12a à 12j) sont réalisés sous forme de ventilateurs et **en ce que** le dispositif de commande (16) est conçu pour commander une vitesse de rotation des dispositifs d'acheminement (12a à 12j) pour la commande du débit volumique d'air évacué de la zone de cabine d'aéronef (14) par les dispositifs d'acheminement (12a à 12j).

3. Système selon la revendication 1 ou 2,
**caractérisé en ce qu'**en cas de panne d'un dispositif d'acheminement (12c), le dispositif de commande (16) est conçu pour commander au moins une partie des dispositifs d'acheminement (12a, 12b, 12d à 12j) encore fonctionnels restants de telle sorte que les dispositifs d'acheminement (12a, 12b, 12d à 12j) encore fonctionnels restants évacuent chacun de la zone de cabine d'aéronef (14) un débit volumique d'air augmenté de la même valeur.

4. Système selon l'une des revendications 1 à 3,
**caractérisé en ce qu'**en cas de panne d'un dispositif d'acheminement (12c), le dispositif de commande (16) est conçu pour commander au moins une partie des dispositifs d'acheminement (12a, 12b, 12d à 12j) encore fonctionnels restants de telle sorte que les dispositifs d'acheminement (12a, 12b, 12d à 12j) encore fonctionnels restants évacuent chacun de la zone de cabine d'aéronef (14) un débit volumique d'air augmenté d'une valeur qui est définie par le dispositif de commande (16) en fonction d'au moins un paramètre.

5. Système selon la revendication 4,
**caractérisé en ce que** le/les paramètre(s) qui est/sont utilisé(s) par le dispositif de commande (16) en cas de panne d'un dispositif d'acheminement (12a, 12b, 12d à 12j) pour commander au moins une partie des dispositifs d'acheminement encore fonctionnels restants (12a, 12b, 12d à 12j), constitue/constituent un paramètre caractéristique de la disposition des dispositifs d'acheminement (12a, 12b, 12d à 12j) encore fonctionnels restants par rapport au dispositif d'acheminement (12c) en panne et/ou un paramètre caractéristique de la puissance maximale des dispositifs d'acheminement (12a, 12b, 12d à 12j) encore fonctionnels restants.

6. Système selon la revendication 5,
**caractérisé en ce qu'**en cas de panne d'un dispositif d'acheminement (12c), le dispositif de commande (16) est conçu pour commander le fonctionnement d'au moins une partie des dispositifs d'acheminement (12a, 12b, 12d à 12j) encore fonctionnels restants en fonction du paramètre caractéristique de la disposition des dispositifs d'acheminement (12a, 12b, 12d à 12j) encore fonctionnels restants par rapport au dispositif d'acheminement (12c) en panne de telle sorte que le débit volumique d'air évacué de la zone de cabine d'aéronef (14) par un dispositif d'acheminement encore fonctionnel restant (12a, 12b, 12d à 12j) est augmenté d'une valeur d'autant plus élevée que le dispositif d'acheminement encore fonctionnel restant (12a, 12b, 12d à 12j) est disposé près du dispositif d'acheminement (12c) en panne.

7. Procédé pour acheminer de l'air de recirculation issu d'une cabine d'aéronef, dans le cadre duquel un dispositif de commande (16) commande une pluralité de dispositifs d'acheminement (12a à 12 j) qui sont répartis le long d'une zone de cabine d'aéronef (15) de telle sorte que, au cours du fonctionnement normal du système (10), chaque dispositif d'acheminement (12a à 12j) évacue de la zone de cabine d'aéronef (14) un débit volumique d'air prédéterminé,
**caractérisé en ce que** les dispositifs d'acheminement (12a à 12j) sont, pour ce qui est de leur puissance d'acheminement maximale, adaptés aux exigences posées aux dispositifs d'acheminement (12a à 12j) au cours du fonctionnement normal du système (10) et **en ce qu'**en cas de panne d'un dispositif d'acheminement (12c), ledit dispositif de commande (16) est conçu pour commander au moins une partie des dispositifs d'acheminement (12a, 12b, 12d à 12j) encore fonctionnels restants de telle sorte que, au cours du fonctionnement normal du système (10), le débit volumique d'air global évacué de la zone de cabine d'aéronef (14) par les dispositifs d'acheminement (12a, 12b, 12d à 12j) encore fonctionnels restants est augmenté d'une valeur qui correspond à une valeur de débit volumique d'air évacué de la zone de cabine d'aéronef (14) par le dispositif d'acheminement (12c) en panne.

8. Procédé selon la revendication 7,
**caractérisé en ce que** le dispositif de commande (16) commande une vitesse de rotation des dispositifs d'acheminement (12a à 12j) réalisés sous forme de soufflantes pour la commande du débit volumique d'air évacué de la zone de cabine d'aéronef (14) par les dispositifs d'acheminement (12a à 12j).

9. Procédé selon la revendication 7 ou 8,
**caractérisé en ce qu'**en cas de panne d'un dispositif d'acheminement (12c), le dispositif de commande (16) commande au moins une partie des dispositifs d'acheminement fonctionnels restants (12a, 12b, 12d à 12j) de telle sorte que les dispositifs d'acheminement (12a, 12b, 12d à 12j) encore fonctionnels restants évacuent chacun de la zone de cabine d'aéronef (14) un débit volumique d'air augmenté de la même valeur.

10. Procédé selon l'une des revendications 7 à 9,
**caractérisé en ce qu'**en cas de panne d'un dispositif d'acheminement (12c), le dispositif de commande (16) commande au moins une partie des dispositifs d'acheminement (12a, 12b, 12d à 12j) encore fonctionnels restants de telle sorte que les dispositifs d'acheminement (12a, 12b, 12d à 12j) encore fonctionnels restants évacuent chacun de la zone de cabine d'aéronef (14) un débit volumique d'air augmenté d'une valeur qui est définie par le dispositif de commande (16) en fonction d'au moins un paramètre.

11. Procédé selon la revendication 10,
**caractérisé en ce que** le/les paramètre(s) qui est/sont utilisé(s) par le dispositif de commande (16) en cas de panne d'un dispositif d'acheminement (12c) pour commander au moins une partie des dispositifs d'acheminement (12a, 12b, 12d à 12j) encore fonctionnels restants, constitue/constituent un paramètre caractéristique de la disposition des dispositifs d'acheminement (12a, 12b, 12d à 12j) encore fonctionnels restants par rapport au dispositif d'acheminement (12c) en panne et/ou un paramètre caractéristique de la puissance maximale des dispositifs d'acheminement (12a, 12b, 12d à 12j) encore fonctionnels restants.

12. Procédé selon la revendication 11,
**caractérisé en ce qu'**en cas de panne d'un dispositif d'acheminement (12c), le dispositif de commande (16) commande le fonctionnement d'au moins une partie des dispositifs d'acheminement (12a, 12b, 12d à 12j) encore fonctionnels restants en fonction du paramètre caractéristique de la disposition des dispositifs d'acheminement (12a, 12b, 12d à 12j) encore fonctionnels restants par rapport au dispositif d'acheminement (12c) en panne de telle sorte que le débit volumique d'air évacué de la zone de cabine d'aéronef (14) par un dispositif d'acheminement (12a, 12b, 12d à 12j) encore fonctionnel restant est augmenté d'une valeur d'autant plus grande que le dispositif d'acheminement (12a, 12b, 12d à 12j) encore fonctionnel restant est disposé près du dispositif d'acheminement (12c) en panne.
